# EUROPÄISCHE PATENTSCHRIFT

(11) **EP 2 394 502 B1**
(45) Veröffentlichungstag und Bekanntmachung des Hinweises auf die Patenterteilung: **07.08.2019**
(21) Anmeldenummer: 10189346.9
(22) Anmeldetag: 29.10.2010
(51) Int. Cl.: A01D 34/14, A01D 75/18

(54) **Landwirtschaftliches Fahrzeug mit Anbaugerät**
Agricultural vehicle with extension device
Véhicule agricole doté d'un élément auxiliaire

(30) Priorität: 20.01.2010 DE 102010005256
(43) Veröffentlichungstag der Anmeldung: 14.12.2011
(73) Patentinhaber: CLAAS Industrietechnik GmbH, 33106 Paderborn (DE)
(72) Erfinder: Berkemann, Stephan, 32760 Detmold (DE); Fedde, Thomas, Dr., 33129, Delbrück (DE); Schlichting, Dirk, 33100, Paderborn (DE)
(74) Vertreter: CLAAS Gruppe

(56) Entgegenhaltungen:
- EP-A1- 0 997 062
- DE-A1- 4 323 631
- DE-A1- 19 823 347
- DE-U1- 29 507 623
- US-A1- 2006 131 040
- US-B1- 6 477 835

## Beschreibung

Die Erfindung betrifft ein landwirtschaftliches Fahrzeug mit einem austauschbaren Anbaugerät, insbesondere eine Erntemaschine, bei der als Anbaugerät an unterschiedliche Arten von Erntegut angepasste Vorsätze verwendbar sind.

Ein solches Anbaugerät ist meist mit Hilfe eines oder mehrer hydraulischer Stellglieder höhenverstellbar, um es vom Boden aufnehmen und in eine für den Gebrauch geeignete Höhe anheben zu können.

Aus DE 198 23 247 A1 ist ein landwirtschaftliches Fahrzeug bekannt, bei dem zwei solche hydraulischen Stellglieder mit einem ersten bzw. einem zweiten Druckgasvorrat kommunizieren. Die Stellglieder greifen einerseits an einer Karosserie des Fahrzeugs und andererseits an einer Fahrwerkschwinge an. Indem diese Stellglieder mit Druckgasvorräten in zwei Druckspeichern kommunizieren, ermöglichen sie gedämpfte elastische Schwingungen des Fahrzeugs und des daran montierten Erntevorsatzes relativ zum Untergrund.

Der Erntevorsatz wirkt auf die hydraulischen Stellglieder mit einem langen Hebelarm. Wenn das Fahrzeug Bodenunebenheiten überfährt, können die am Erntevorsatz auftretenden Trägheitskräfte starke Nickbewegungen anregen. Um diese zu vermeiden, ist es zweckmäßig, wenn auch ein zwischen dem Erntevorsatz und der Karosserie angeordnetes hydraulisches Stellglied in der oben beschriebenen Weise schwingfähig ist.

Verschiedene Typen von Erntevorsätzen können stark unterschiedliche Massen aufweisen. Je höher das Gewicht des Erntevorsatzes ist, umso größer ist der Druck in dem hydraulischen Stellglied, der erforderlich ist, um den Erntevorsatz mit einer vorgegebenen Bodenfreiheit oder unter Ausübung eines vorgegebenen Auflagedrucks auf dem Boden zu halten. Das Volumen des Druckgasvorrats ist umgekehrt proportional zu diesem Druck. Infolgedessen muss eine umso größere Menge Hydraulikflüssigkeit in das Stellglied gepumpt werden, um eine gewünschte Bodenfreiheit zu erreichen, je schwerer der jeweils montierte Erntevorsatz ist. Eine gegebene Auslenkung aus der Ruhestellung führt daher bei einem schweren Erntevorsatz zu einem proportional deutlich stärkeren Druckanstieg im Druckgasvorrat als bei einem leichten Vorsatz. Die Schwingungsdynamik und das Dämpfungsverhalten des Erntevorsatzes sind je nach Masse unterschiedlich. Um ein ideales Dämpfungsverhalten zu gewährleisten, ist es erforderlich, die Menge des Druckgases (was in der Praxis gleichbedeutend ist mit dem Druck, der in dem hydraulischen Stellglied herrscht, wenn der Erntevorsatz abmontiert ist oder auf dem Boden ruht) an das Gewicht des jeweils zu verwendenden Vorsatzes anzupassen. Hierzu ist ein Werkstattbesuch erforderlich, was für den Benutzer des Fahrzeugs kostspielig und zeitraubend ist. Ein schneller Austausch von Erntevorsätzen, der häufig erforderlich ist, um unterschiedliche Fruchtarten mit einem gleichen Fahrzeug in kurzer Zeit zu bearbeiten, ist in der Praxis nur möglich, wenn auf eine Anpassung der Gasmenge verzichtet wird und ein uneinheitliches Schwing- und Dämpfungsverhalten von Erntevorsätzen unterschiedlichen Gewichts in Kauf genommen wird.

Aufgabe der vorliegenden Erfindung ist, ein landwirtschaftliches Fahrzeug anzugeben, das in kurzer Zeit zwischen verschiedenen Anbaugeräten umrüstbar ist und es erlaubt, Schwingungen dieser Anbaugeräte relativ zum Fahrzeug unabhängig von deren Masse gleich wirksam zu dämpfen.

Die Aufgabe wird gelöst, indem bei einem landwirtschaftlichen Fahrzeug mit einem austauschbaren Anbaugerät, das in Bezug auf einen vom Fahrzeug befahrenen Untergrund gegen den Druck wenigstens eines ersten Druckgasvorrats elastisch auslenkbar ist, einem zweiten Druckgasvorrat und Mitteln zum Verändern des Volumens des zweiten Druckgasvorrats der erste und zweite Druckgasvorrat durch eine Druckgasleitung verbunden sind und in der Druckgasleitung ein Sperrventil angeordnet ist. Die Mittel zum Verändern des Volumens erlauben es, über das Volumen auch den Druck des zweiten Druckgasvorrats willkürlich zu verändern. Durch Öffnen des Sperrventils kann ein Druckausgleich zwischen erstem und zweitem Druckgasvorrat herbeigeführt werden. Dadurch ist es möglich, nicht nur bisher den Druck des ersten Druckgasvorrats zu steuern, sondern auch die darin enthaltene Gasmenge. So ist es allein mit an Bord des Fahrzeugs vorhandenen Mitteln möglich, diese Gasmenge an das Gewicht eines zu verwendenden Anbaugeräts anzupassen.

Vorzugsweise ist der zweite Druckgasvorrat in einem Druckbehälter untergebracht, und die Mittel zum Verändern des Volumens umfassen ein Ein-Auslassventil für eine Druckflüssigkeit, das an den Druckbehälter angeschlossen ist. So kann eine Druckflüssigkeitsquelle, die herkömmlicherweise zum Betreiben eines hydraulischen Stellglieds ohnehin vorhanden ist, auch zum Steuern des Volumens des zweiten Druckgasvorrats nutzbar gemacht werden.

In analoger Weise ist bevorzugt, dass auch der erste Druckgasvorrat in einem Druckbehälter untergebracht und ein Ein-Auslassventil für eine Druckflüssigkeit an den Druckbehälter angeschlossen ist.

Um zu verhindern, dass Gas des Druckgasvorrats sich in der Druckflüssigkeit löst und damit aus dem System entweicht, sind innerhalb des Druckbehälters Druckgasvorrat und Druckflüssigkeit zweckmäßigerweise voneinander durch eine bewegliche Wandung getrennt. Darüber hinaus gewährleistet die Wandung eine von der Einbaulage unabhängige Funktion der Druckbehälter.

Zweckmäßigerweise sind beide Ein-Auslassventile von einer gleichen Quelle für die Druckflüssigkeit gespeist.

Wenn das Volumen des zweiten Druckbehälters wesentlich kleiner als das des ersten ist, genügt zwar eine kleine Menge an in den zweiten Druckbehälters gepumpter Druckflüssigkeit, um einen hohen Druck im zweiten Druckbehälter aufzubauen, doch kann nur eine kleine Gasmenge zwischen erstem und zweitem Druckgasvorrat ausgetauscht werden, so dass die Bandbreite der Gewichte der Anbaugeräte, an die der erste Druckgasvorrat angepasst werden kann, eingeschränkt ist. Daher ist das Volumen des zweiten Druckbehälters vorzugsweise wenigstens halb so groß wie das des ersten Druckbehälters. Im Idealfall sind die Volumina gleich. Das Volumen des zweiten Druckbehälters kann ein Mehrfaches des Volumens des ersten Druckbehälters betragen, insbesondere wenn mehrere erste Druckbehälter über einen gemeinsamen zweiten Druckbehälter gesteuert werden.

Das Sperrventil ist vorzugsweise ein Rückschlagventil mit Sperrrichtung vom ersten zum zweiten Druckgasvorrat. Ein solches Sperrventil ermöglicht automatisch einen Druckausgleich, wenn der zweite Druckgasvorrat verdichtet wird und sein Druck höher wird als der des ersten Druckgasvorrats; es sperrt jedoch, sobald der Druck des ersten Druckgasvorrats der höhere ist.

Um auch eine Druckverringerung im ersten Druckgasvorrat zu ermöglichen, sollte das Rückschlagventil entsperrbar sein.

Vorzugsweise ist es elektrisch entsperrbar, um eine Fernsteuerung der Druckanpassung, z.B. von einem Armaturenbrett des Fahrzeugs aus, zu ermöglichen.

Eine manuelle Entsperrung kommt ebenfalls in Betracht; vorzugsweise sind beide Möglichkeiten gleichzeitig gegeben, so dass durch manuellen Eingriff auch dann noch Druck aus dem ersten Druckgasvorrat abgelassen werden kann, wenn die Druckdifferenz zwischen beiden Druckgasvorräten so groß ist, dass eine elektrisch erzeugte Schaltkraft sie nicht mehr überwinden kann.

Um zu verhindern, dass eine Druckdifferenz zwischen den zwei Druckgasvorräten die Kraft einer elektrischen Steuerung übersteigt, kann dem ersten Druckgasvorrat auch ein Druckbegrenzungsventil zugeordnet sein.

Gegenstand der Erfindung ist ferner ein Verfahren zum Anpassen des Fahrzeugs an das Gewicht eines Anbauwerkzeugs mit den Schritten:
b) Herbeiführen eines Druckausgleichs zwischen erstem und zweitem Druckgasvorrat;
c) Einstellen eines für das Anbauwerkzeug vorgegebenen Solldruckwerts im ersten und zweiten Druckgasvorrat durch Verändern des Volumens des zweiten Druckgasvorrats; und
d) Sperren des Sperrventils.

Wenn als Sperrventil ein Rückschlagventil verwendet wird, ergibt sich der Druckausgleich zwischen erstem und zweitem Druckgasvorrat selbsttätig, wenn der Druck des zweiten Druckgasvorrats über den des ersten erhöht wird.

Zweckmäßigerweise wird zur Vorbereitung der Anpassung zunächst der erste Druckgasvorrat auf ein Referenzvolumen eingestellt. Es genügt dann, Solldruckwerte für jedes Anbauwerkzeug lediglich für dieses Referenzvolumen zu spezifizieren.

Vorzugsweise wird zum Einstellen des Referenzvolumens die Druckflüssigkeit aus dem Druckbehälter des ersten Druckgasvorrats abgelassen.

Um nach dem Einstellen des Solldruckwerts das als Rückschlagventil ausgebildete Sperrventil zu sperren, genügt es, den zweiten Druckgasvorrat zu entspannen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht des vorderen Teils eines Mähdreschers mit einem mittels eines Hydraulikzylinders einstellbaren Erntevorsatz;
- Fig. 2: den vorderen Teil eines selbstfahrenden Feldhäckslers mit einem einstellbaren Erntevorsatz;
- Fig. 3: ein Blockdiagramm des Hydrauliksystems des Mähdreschers aus Fig. 1 bzw. des Feldhäckslers aus Fig. 2; und
- Fig. 4: eine zweite Ausgestaltung des Hydrauliksystems.

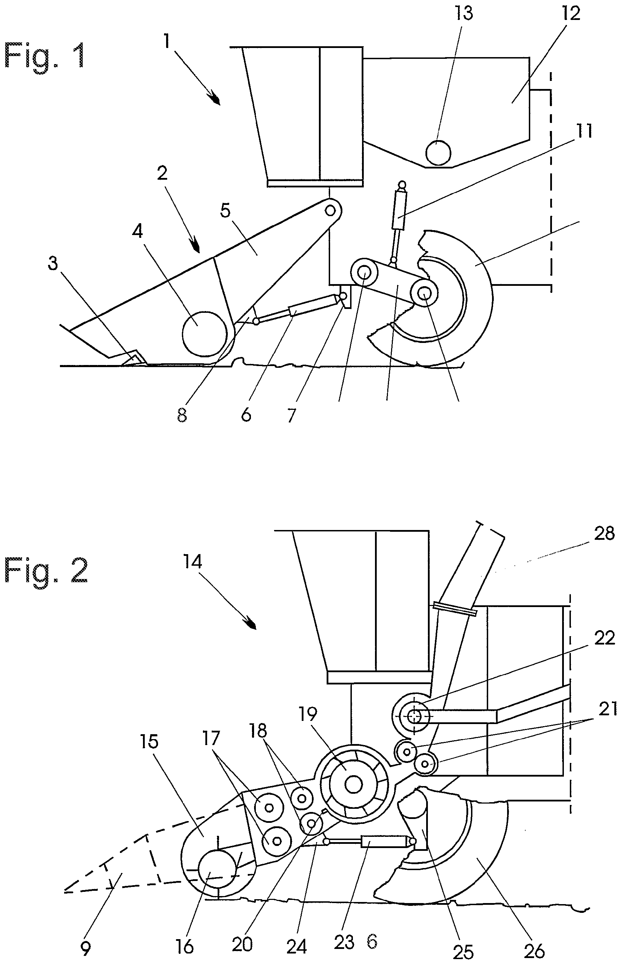

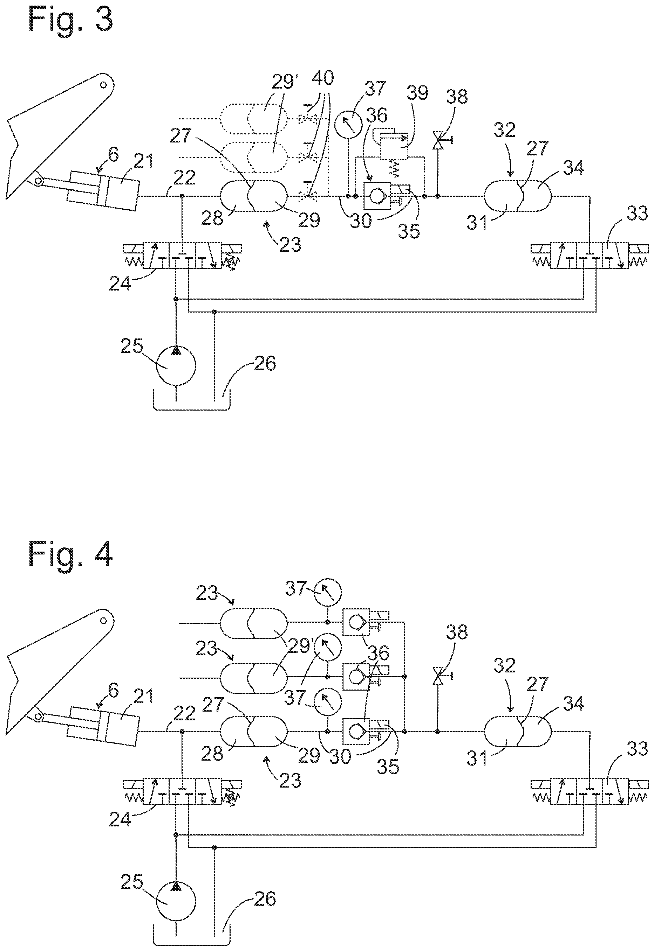

Fig. 1 zeigt schematisch den vorderen Teil eines Mähdreschers 1 mit Korntank 12 und Korntankentleerungsschnecke 13. Ein Erntevorsatz 2 mit Schneidwerk 3, Einzugschnecke 4 und Schrägförderer 5 ist austauschbar an einer Vorderseite des Mähdreschers 1 montiert. Der Erntevorsatz 2 ist am Mähdrescher 1 mit Hilfe eines Hydraulikzylinders 6 abgestützt, der bei 8 an den Erntevorsatz 2 angeschlagen und über einen Befestigungsblock 7 fest mit dem Maschinenrahmen des Mähdreschers 1 verbunden ist. Mit Hilfe des Hydraulikzylinders 6 ist die Höhe des Erntevorsatzes 2 über dem Boden einstellbar. Ein Hydrauliksystem, welches den Hydraulikzylinder 6 abfedert und mit Öl versorgt, wird später mit Bezug auf Fig. 3 beschrieben.

Fig. 2 zeigt eine schematische Ansicht des vorderen Teils eines selbstfahrendenen Feldhäckslers 14. Ein Erntevorsatz 15 mit einer Pickuptrommel 16 ist an einem Einzuggehäuse mit Einzugwalzen 17 und Vorpresswalzen 18 lösbar montiert. Der Erntevorsatz 15 kann ersetzt werden durch ein schematisch mit gestrichelten Linien dargestelltes Maisgebiss 9. Das Einzuggehäuse ist wie der Erntevorsatz 2 des Mähdreschers aus Fig. 1 durch einen Hydraulikzylinder 6 höhenverstellbar abgestützt.

Fig. 3 zeigt ein Hydrauliksystem, das in dem Mähdrescher der Fig. 1 oder dem Feldhäcksler der Fig. 2 zur Ölversorgung des Hydraulikzylinders 6 vorgesehen ist. Eine mit Hydrauliköl gefüllte Arbeitskammer 21 des Hydraulikzylinders 6 ist über eine Ölleitung 22 mit einem ersten Druckbehälter 23 und einem ersten Wegeventil 24 verbunden. Aus einem in der Fig. 3 dargestellten Sperrzustand ist das Wegeventil 24 wahlweise in einen Zustand, in dem es die Ölleitung mit dem Druckausgang einer Ölpumpe 25 verbindet, oder in einen Zustand umschaltbar, in dem es die Ölleitung 22 mit einem Öltank 26 verbindet, aus welchem die Ölpumpe 25 ansaugt. Der Druckbehälter 25 ist durch eine bewegliche Membran 27 oder durch einen Kolben in eine Ölkammer 28 und eine Druckgaskammer 29 unterteilt. Wenn beim Überfahren von Bodenunebenheiten der Erntevorsatz 2 bzw. 9 gegen den Maschinenrahmen des Mähdreschers 1 bzw. Feldhäckslers 14 schwingt, so ändert sich das Volumen der Arbeitskammer 21, und Öl wird in die Ölkammer 28 des Druckbehälters 23 verdrängt bzw. aus dieser angesaugt. Die dabei auftretende Verdichtung bzw. Entspannung des in der Druckgaskammer 29 eingeschlossenen Gasvorrats lässt den Erntevorsatz elastisch schwingen. Strömungsverluste in der Leitung 22 dämpfen die Schwingung.

Die Druckgaskammer 29 ist über eine Druckgasleitung 30 mit einer Druckgaskammer 31 eines zweiten Druckbehälters 32 verbunden. Die beiden Druckbehälter 23, 32 können baugleich sein. Ein mit dem Wegeventil 24 baugleiches Wegeventil 33 verbindet eine Ölkammer 34 des Druckbehälters 32 wahlweise mit der Ölpumpe 25 oder mit dem Öltank 26.

In der Druckgasleitung 30 ist ein über eine Magnetspule 35 steuerbares Rückschlagventil 36 in Sitzbauweise angeordnet. Das Rückschlagventil 36 ist in der Leitung 30 so orientiert, dass ein in der Druckgaskammer 29 herrschender Überdruck einen Dichtkörper des Rückschlagventils 36 gegen einen Sitz presst und so die beiden Druckgaskammern 29, 31 hermetisch voneinander trennt. Wie in der Fig. 2 gestrichelt angedeutet, kann an dem Rückschlagventil ein durch Muskelkraft betätigbares Bedienelement für den Fall vorgesehen sein, das die Kraft der Magnetspule 35 nicht ausreicht, um das Rückschlagventil 36 zu öffnen. Alternativ kann auch ein Überdruckventil 39 antiparallel zum Rückschlagventil 36 in die Druckgasleitung 30 eingefügt sein, um einen Überdruck der Druckgaskammer 29 gegenüber der Kammer 31 so zu begrenzen, dass die Kraft der Spule 35 zuverlässig zum Öffnen des Ventils 36 ausreicht.

Zwischen dem Rückschlagventil 36 und der Druckgaskammer 29 ist ein Drucksensor 37 an die Leitung 30 angeschlossen, der mit einem Anzeigeinstrument am Armaturenbrett des Mähdreschers oder Feldhäckslers oder mit einer elektronischen Steuereinheit verbunden ist.

Parallel zu dem Druckbehälter 29 können weitere, in Fig. 2 gestrichelt dargestellte Druckbehälter 29' an die Leitung 30 angeschlossen sein. Wenn dies der Fall ist, dann ist zwischen jedem Druckbehälter 29, 29' und dem Drucksensor 37 jeweils ein Absperrventil 40 vorgesehen, um eine Regelung der Gasmenge in jedem der Druckbehälter 29, 29' einzeln zu ermöglichen.

Zwischen dem Rückschlagventil 36 und der Druckgaskammer 31 ist ein Gaseinfüllventil 38 angeschlossen. Über das Gaseinfüllventil 38 erhält das Hydrauliksystem beim Hersteller eine erste Druckgasfüllung, vorzugsweise aus Stickstoff, Helium oder einem anderen chemisch inerten, möglichst wenig in dem Hydrauliköl lösbaren Gas. Beim Einfüllen des Druckgases öffnet das Rückschlagventil 36, so dass sich derselbe Druck in beiden Druckgaskammern 29, 31 einstellt. Während des Befüllens verbinden beide Wegeventile 24 die Ölkammern 28, 34 mit dem Öltank 26, so dass sämtliches Hydrauliköl aus den Druckbehältern 23, 32 verdrängt wird und die Druckgaskammern 29, 31 die Druckbehälter 23, 32 praktisch vollständig ausfüllen. Die eingefüllte Gasmenge ist bemessen, um in diesem Zustand einen Druck von ca. 60 bar in den Druckgaskammern 29, 31 zu erhalten.

Wenn der Erntevorsatz ausgetauscht werden soll, wird über das Wegeventil 24 die Ölleitung 22 mit dem Tank 26 verbunden. Dadurch sinkt der Erntevorsatz 2 bzw. 15 auf den Boden und kann abmontiert werden. Gleichzeitig entweicht alles Öl aus dem Druckbehälter 23. Die Druckgaskammer 29 hat nun ein eindeutig festgelegtes, bekanntes Volumen.

Nachdem ein neuer Erntevorsatz montiert worden ist, muss ein diesem Erntevorsatz zugeordneter, anhand seines Gewichts festgelegter Vorspanndruck in der Druckgaskammer 29 eingestellt werden. Dies kann unter der Aufsicht des Fahrers geschehen, der den einzustellenden Druck zum Beispiel in einem Handbuch nachliest und mit Hilfe eines an den Drucksensor 37 angeschlossenen Anzeigeinstruments mit dem in der Druckgaskammer 29 herrschenden Druck vergleicht; denkbar ist aber auch, Sensoren zur automatischen Erfassung des Typs des montierten Erntevorsatzes vorzusehen, und die elektronische Steuereinheit den zum erfassten Typ passenden Vorspanndruck anhand einer Nachschlagetabelle ermitteln und einstellen zu lassen.

Wenn der neu einzustellende Druck kleiner ist als der gegenwärtig in der Druckgaskammer 29 herrschende Druck, d.h. wenn der neu montierte Erntevorsatz leichter ist als der vorherige, dann genügt es, mit Hilfe der Magnetspule 35 das Rückschlagventil 36 so lange zu öffnen, bis genügend Gas aus der Kammer 29 abgeflossen und der gewünschte Vorspanndruck erreicht ist. Es kann dazu erforderlich sein, auch aus der Ölkammer 34 über das Wegeventil 33 Öl zum Tank 26 abzulassen.

Wenn der in der Kammer 29 neu einzustellende Vorspanndruck höher ist als der gegenwärtig dort herrschende Druck, dann wird über das Wegeventil 33 die Ölkammer 34 mit der Pumpe 25 verbunden. In die Kammer 34 zuströmendes Öl drängt die Membran 27 des Druckbehälters 32 zurück, und sobald der Druck in der Kammer 31 höher als in der Kammer 29 ist, strömt Gas über das Rückschlagventil 36 in die Kammer 29 ein. Dies geschieht so lange, bis der gewünschte Vorspanndruck in der Kammer 29 erreicht ist. Wenn beide Druckbehälter 32, 23 gleich groß sind, ist unter Vernachlässigung von Totvolumina ein Vorspanndruck von 120 bar im Druckbehälter 23 und in der Arbeitskammer 21 erreichbar.

Anschließend wird über das Wegeventil 24 die Ölkammer 28 mit der Pumpe 25 verbunden, um die zum Anheben des Erntevorsatzes in eine gewünschte Arbeitshöhe erforderliche Ölmenge in den Hydraulikzylinder 6 zu pressen. Ein Teil des zugeführten Öls gelangt auch in den Druckbehälter 23, so dass sich dort die Ölkammer 28 wieder ausdehnt und der Druck in der Druckgaskammer 29 ansteigt. Eine dadurch erhaltene Druckdifferenz von einigen Bar zwischen den Druckgaskammern 29, 31 sorgt für einen hermetischen Abschluss des Rückschlagventils 36.

Zweckmäßigerweise sind die Vorspanndrücke für alle Erntevorsätze so spezifiziert, dass das Volumen der Druckgaskammer 29 im Wesentlichen gleich ist, wenn sich der Erntevorsatz in der Arbeitsstellung befindet. So führt eine gleiche Auslenkung bei allen Erntevorsätzen zu einer proportional gleichen Druckänderung im Druckbehälter 23 und dementsprechend zu identischen Schwingungsperioden. Das heißt, das Bewegungs- und Dämpfungsverhalten der verschiedenen Erntevorsätze ist von ihrer Masse unabhängig.

Fig. 4 zeigt ein Blockdiagramm eines Hydrauliksystems mit mehreren ersten Druckbehältern 23, die jeweils über ein eigenes Rückschlagventil 36 mit dem zweiten Druckbehälter 32 verbindbar sind. Eine Druckanpassung in allen ersten Druckbehältern 23 kann hier erfolgen, indem zunächst so viel Öl in die Kammer 34 gepumpt wird, dass der höchste in einem der ersten Druckbehälter 23 benötigte Druck in allen ersten Druckbehältern 23 erreicht wird. Anschließend wird das Gas in der Druckgaskammer 31 entspannt, und die Rückschlagventile 36 derjenigen Druckbehälter 23, die einen niedrigeren Druck annehmen sollen, werden geöffnet, bis in ihnen der zweithöchste in einem der Druckbehälter benötigte Druck erreicht ist. Nach einer weiteren Entspannung des Druckgases in der Kammer 31 wird das Rückschlagventil 36 des Druckbehälters 23 mit dem niedrigsten Zieldruck geöffnet, bis auch in diesem der Zieldruck erreicht ist.

### Bezugszeichen

- 1: Mähdrescher
- 2: Erntevorsatz
- 3: Schneidwerk
- 4: Einzugschnecke
- 5: Schrägförderer
- 6: Hydraulikzylinder
- 7: Befestigungsblock
- 8: Anschlag
- 9: Maisgebiss
- 12: Korntank
- 13: Korntankentleerungsschnecke
- 14: Feldhäcksler
- 15: Erntevorsatz
- 16: Pickuptrommel
- 17: Einzugwalzen
- 18: Vorpresswalzen
- 21: Arbeitskammer
- 22: Ölleitung
- 23: Druckbehälter
- 24: Wegeventil
- 25: Ölpumpe
- 26: Öltank
- 27: Membran
- 28: Ölkammer
- 29: Druckgaskammer
- 30: Druckgasleitung
- 31: Druckgaskammer
- 32: Druckbehälter
- 33: Wegeventil
- 34: Ölkammer
- 35: Magnetspule
- 36: Rückschlagventil
- 37: Drucksensor
- 38: Gaseinfüllventil
- 39: Überdruckventil
- 40: Absperrventil

## Patentansprüche

1. Landwirtschaftliches Fahrzeug (1; 14) mit einem austauschbaren Anbaugerät (2; 15), das in Bezug auf einen vom Fahrzeug (1; 14) befahrenen Untergrund gegen den Druck wenigstens eines ersten Druckgasvorrats (29) elastisch auslenkbar ist, einem zweiten Druckgasvorrat (31), wobei der erste und zweite Druckgasvorrat (29; 31)durch eine Druckgasleitung (30) verbunden sind, **dadurch gekennzeichnet, dass** in der Druckgasleitung (30) ein Sperrventil (36) angeordnet ist und Mittel (25, 33) zum Verändern des Volumens des zweiten Druckgasvorrats (31) vorhanden sind.

2. Fahrzeug nach Anspruch 1, **dadurch gekennzeichnet, dass** der zweite Druckgasvorrat (32) in einem Druckbehälter (32) untergebracht ist und dass die Mittel zum Verändern des Volumens (25, 33) ein Ein-Auslassventil (33) für eine Druckflüssigkeit umfassen, das an den Druckbehälter (32) angeschlossen ist.

3. Fahrzeug nach Anspruch 1 oder 2, **dadurch gekennzeichnet, dass** der erste Druckgasvorrat (29) in einem Druckbehälter (23) untergebracht ist und dass ein Ein-Auslassventil (24) für eine Druckflüssigkeit an den Druckbehälter (23) angeschlossen ist.

4. Fahrzeug nach Anspruch 2 oder 3, **gekennzeichnet durch** eine bewegliche Wandung (27), die innerhalb des Druckbehälters (23; 32) den Druckgasvorrat (29; 31) von der Druckflüssigkeit trennt.

5. Fahrzeug nach Anspruch 2 und Anspruch 3, **dadurch gekennzeichnet, dass** beide Ein-Auslassventile (24; 33) von einer gleichen Quelle (25) für die Druckflüssigkeit gespeist sind.

6. Fahrzeug nach Anspruch 2 und Anspruch 3 oder nach Anspruch 5, **dadurch gekennzeichnet, dass** das Volumen des zweiten Druckbehälters (32) wenigstens halb so groß ist wie das Volumen des ersten Druckbehälters (23) .

7. Fahrzeug nach einem der vorhergehenden Ansprüche, **dadurch gekennzeichnet, dass** das Sperrventil ein Rückschlagventil (36) mit Sperrrichtung vom ersten zum zweiten Druckgasvorrat (29; 31) ist.

8. Fahrzeug nach Anspruch 7, **dadurch gekennzeichnet, dass** das Rückschlagventil (36) in Sitzbauweise ausgeführt ist.

9. Fahrzeug nach Anspruch 7 oder 8, **dadurch gekennzeichnet, dass** das Rückschlagventil (36) entsperrbar, vorzugsweise elektrisch und/oder manuell entsperrbar ist.

10. Fahrzeug nach einem der Ansprüche 7 bis 9, **dadurch gekennzeichnet, dass** dem ersten Druckgasvorrat (29) ein Druckbegrenzungsventil (39) zugeordnet ist.

11. Verfahren zum Anpassen des Fahrzeugs (1; 14) nach Anspruch 1 an das Gewicht eines Anbauwerkzeugs (2; 15) mit den Schritten:
b) Herbeiführen eines Druckausgleichs zwischen erstem und zweitem Druckgasvorrat (29; 31);
c) Einstellen eines für das Anbauwerkzeug (2; 15) vorgegebenen Solldruckwerts im ersten und zweiten Druckgasvorrat (29; 31) durch Verändern des Volumens des zweiten Druckgasvorrats (31);
d) Sperren des Sperrventils (36).

12. Verfahren nach Anspruch 12, **gekennzeichnet durch** den vorbereitenden Schritt
a) Einstellen des ersten Druckgasvorrats (29) auf ein Referenzvolumen.

13. Verfahren nach Anspruch 13, **dadurch gekennzeichnet, dass** zum Einstellen des Referenzvolumens (29) alle Druckflüssigkeit aus dem Druckbehälter (23) des ersten Druckgasvorrats (29) abgelassen wird.

14. Verfahren nach einem der Ansprüche 12 bis 14, **dadurch gekennzeichnet, dass** zum Sperren des als Rückschlagventil ausgebildeten Sperrventils (36) der zweite Druckgasvorrat (31) entspannt wird.

## Claims

1. An agricultural vehicle (1; 14) having an interchangeable implement (2; 15) which can be elastically deflected in relation to ground travelled over by the vehicle (1; 14) against the pressure of at least one first compressed gas supply (29), a second compressed gas supply (31), wherein the first and second compressed gas supplies (29; 31) are connected via a compressed gas line (30), **characterized in that** a check valve (36) is disposed in the compressed gas line (30) and means (25, 33) are provided to vary the volume of the second compressed gas supply (31).

2. The vehicle as claimed in claim 1, **characterized in that** the second compressed gas supply (31) is accommodated in a pressure vessel (32) and **in that** the means for varying the volume (25, 33) comprise a directional control valve (33) for a hydraulic fluid which is attached to the pressure vessel (32).

3. The vehicle as claimed in claim 1 or claim 2, **characterized in that** the first compressed gas supply (29) is accommodated in a pressure vessel (23) and **in that** a directional control valve (24) for a hydraulic fluid is connected to the pressure vessel (23).

4. The vehicle as claimed in claim 2 or claim 3, **characterized by** a movable wall (27) which separates the compressed gas supply (29; 31) from the hydraulic fluid inside the pressure vessel (23; 32).

5. The vehicle as claimed in claim 2 and claim 3, **characterized in that** both directional control valves (24; 33) are supplied from the same source (25) for the hydraulic fluid.

6. The vehicle as claimed in claim 2 and claim 3 or as claimed in claim 5, **characterized in that** the volume of the second pressure vessel (32) is at least half the size of the volume of the first pressure vessel (23).

7. The vehicle as claimed in one of the preceding claims, **characterized in that** the check valve is a return valve (36) with the blocked direction being from the first to the second compressed gas supply (29; 31).

8. The vehicle as claimed in claim 7, **characterized in that** the return valve (36) is of the seated type.

9. The vehicle as claimed in claim 7 or claim 8, **characterized in that** the return valve (36) is unlockable, and is preferably electrically and/or manually unlockable.

10. The vehicle as claimed in one of claims 7 to 9, **characterized in that** a pressure relief valve (39) is associated with the first compressed gas supply (29).

11. A method for adapting the vehicle (1; 14) as claimed in claim 1 to the weight of an implement (2; 15), having the following steps:
b) bringing about a pressure equalisation between the first and the second compressed gas supplies (29; 31);
c) setting a set pressure value which is predetermined for the implement (2; 15) in the first and second compressed gas supply (29; 31) by varying the volume of the second compressed gas supply (31);
d) locking the check valve (36).

12. The method as claimed in claim 12, **characterized by** the following preparatory step:
a) setting the first compressed gas supply (29) to a reference volume.

13. The method as claimed in claim 13, **characterized in that** in order to set the reference volume (29), all of the hydraulic fluid is drained from the pressure vessel (23) of the first compressed gas supply (29).

14. The method as claimed in one of claims 12 to 14, **characterized in that**, in order to lock the check valve (36) configured as a return valve, the second compressed gas supply (31) is depressurized.

## Revendications

1. Véhicule agricole (1 ; 14) comprenant un outil rapporté échangeable (2 ; 15) qui, par rapport au terrain emprunté par le véhicule (1 ; 14), est déviable élastiquement à l'encontre de la pression au moins d'une première réserve de gaz sous pression (29), comprenant une seconde réserve de gaz sous pression (31), la première et la seconde réserve de gaz sous pression (29 ; 31) étant reliées par l'intermédiaire d'une conduite de gaz sous pression (30), **caractérisé en ce que** sur la conduite de gaz sous pression (30) est disposée une valve d'arrêt (36), et des moyens (25, 33) sont présents pour modifier le volume de la seconde réserve de gaz sous pression (31).

2. Véhicule selon la revendication 1, **caractérisé en ce que** la seconde réserve de gaz sous pression (32) est logée dans un réservoir sous pression (32), et **en ce que** les moyens pour modifier le volume (25, 33) englobent une valve d'entrée-sortie (33) pour un fluide sous pression, laquelle est reliée au réservoir sous pression (32).

3. Véhicule selon la revendication 1 ou 2, **caractérisé en ce que** la première réserve de gaz sous pression (29) est logée dans un réservoir sous pression (23), et **en ce qu'**une valve d'entrée-sortie (24) pour un fluide sous pression est reliée au réservoir sous pression (23) .

4. Véhicule selon la revendication 2 ou 3, **caractérisé par** une paroi mobile (27) qui, à l'intérieur du réservoir sous pression (23 ; 32), sépare la réserve de gaz sous pression (29 ; 31) du fluide sous pression.

5. Véhicule selon la revendication 2 et la revendication 3, **caractérisé en ce que** les deux valves d'entrée-sortie (24 ; 33) sont alimentées par la même source (25) de fluide sous pression.

6. Véhicule selon la revendication 2 et la revendication 3 ou selon la revendication 5, **caractérisé en ce que** le volume du second réservoir sous pression (32) est égal à au moins la moitié du volume du premier réservoir sous pression (23).

7. Véhicule selon une des revendications précédentes, **caractérisé en ce que** la valve d'arrêt est une valve anti-retour (36) avec une direction d'arrêt de la première à la seconde réserve de gaz sous pression (29 ; 31).

8. Véhicule selon la revendication 7, **caractérisé en ce que** la valve anti-retour (36) est conçue avec un siège.

9. Véhicule selon la revendication 7 ou 8, **caractérisé en ce que** la valve anti-retour (36) est déblocable, de préférence déblocable électriquement et/ou manuellement.

10. Véhicule selon une des revendications 7 à 9, **caractérisé en ce qu'**à la première réserve de gaz sous pression (29) est associée une valve de limitation de pression (39).

11. Procédé pour adapter le véhicule (1 ; 14) selon la revendication 1 au poids d'un outil rapporté (2 ; 15), comprenant les étapes consistant à :
b) instaurer un équilibre de pression entre les première et seconde réserves de gaz sous pression (29 ; 31) ;
c) établir une valeur de pression de consigne prédéfinie pour l'outil rapporté (2 ; 15) dans la première et la seconde réserve de gaz sous pression (29 ; 31) en modifiant le volume de la seconde réserve de gaz sous pression (31) ;
d) bloquer la valve d'arrêt (36).

12. Procédé selon la revendication 12, **caractérisé par** l'étape préparatoire consistant à
a) régler la première réserve de gaz sous pression (29) sur un volume de référence.

13. Procédé selon la revendication 13, **caractérisé en ce que**, pour régler le volume de référence (29), tout le fluide sous pression est vidé du réservoir sous pression (23) de la première réserve de gaz sous pression (29).

14. Procédé selon une des revendications 12 à 14, **caractérisé en ce que**, pour bloquer la valve d'arrêt (36) conformée en valve anti-retour, la seconde réserve de gaz sous pression (31) est détendue.
